Europäisches Patentamt

European Patent Office

Office européen des brevets

(19)

(11) Veröffentlichungsnummer: **0 243 742 B1**

# (12) EUROPÄISCHE PATENTSCHRIFT

(45) Veröffentlichungstag der Patentschrift: 06.03.91

(51) Int. Cl.⁵: **G01N 31/22**

(21) Anmeldenummer: 87105156.1

(22) Anmeldetag: 08.04.87

(54) **Indikator zum Nachweis von Chlor.**

(30) Priorität: 30.04.86 DE 3614723

(43) Veröffentlichungstag der Anmeldung:
04.11.87 Patentblatt 87/45

(45) Bekanntmachung des Hinweises auf die
Patenterteilung:
06.03.91 Patentblatt 91/10

(84) Benannte Vertragsstaaten:
**DE FR GB IT NL SE**

(56) Entgegenhaltungen:
DE-A- 2 203 390
DE-C- 1 001 507

**PATENT ABSTRACTS OF JAPAN, Band 11,
Nr. 84 (P-556)(2531), 13. März 1987 & JP-
A-61-239162**

(73) Patentinhaber: **Drägerwerk Aktiengesellschaft
Moislinger Allee 53-55
W-2400 Lübeck 1(DE)**

(72) Erfinder: **Van der Smissen, Carl-Ernst, Dr.
Am Traveeck 30
W-2400 Lübeck(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen Indikator zum Nachweis von Chlor durch Verfärbung von auf einem Träger aufgebrachtem Kaliumiodid.

Ein derartiger Indikator ist in der DE-PS 1 001 507 beschrieben.

Der bekannte Indikator dient zum Nachweis von Chlor in der Luft. Dazu wird ein Trägermaterial, zum Beispiel Kieselgel, mit einer Kaliumiodidlösung getränkt und in ein Prüfröhrchen gefüllt. Strömt durch das Prüfröhrchen chlorhaltige Luft, wird freies Iod ausgeschieden und färbt die Kieselgelschicht hellbraun. Da diese Verfärbung nicht stabil genug ist, um eine deutliche Anzeige zur Bestimmung des Chlorgehaltes zu erhalten, wird der Träger zusätzlich mit einer Stärkelösung imprägniert. Nunmehr tritt durch die Einwirkung des freigesetzten Iods auf die Stärke eine intensive und deutliche stabile Blaufärbung des imprägnierten Trägers auf.

Nachteilig bei dem bekannten Indikator ist die Tatsache, daß zur stabilen Anlagerung der Stärke an dem Träger ein weiterer Zusatz an Zinkchlorid oder auch Quecksilberiodid notwendig wird. Jedoch kann dieser Stabilisierungszusatz nicht verhindern, daß bei Überleitung von sehr höhen Chlorkonzentrationen über den bekannten imprägnierten Träger ein Ausbleichen der Färbung auftritt und somit eine bleibende Anzeige verhindert.

Der vorliegenden Erfindung liegt somit die Aufgabe zugrunde, einen Indikator der genannten Art so zu verbessern, daß er sowohl zum Nachweis von niedrigen Chlorkonzentrationen genügend empfindlich als auch die entstehende Verfärbung langzeitig und gegenüber hohen Konzentrationen stabil ist.

Diese Aufgabe wird dadurch gelöst, daß der Indikator einen Zusatz an Manganchlorid aufweist.

Das über den Indikator geführte Chlor oxidiert das Manganchlorid zu Braunstein, $MnO_2$, welches eine dunkle Färbung auf dem Träger, zum Beispiel Kieselgel, hervorruft. Die Reaktion zu Braunstein wird weder durch hohe Chlorkonzentrationen noch durch längere Lagerung des Indikators beeinflußt. Sollen niedrigere Chlorkonzentrationen nachgewiesen werden, wird die Bildung von Braunstein aus Manganchlorid, und damit die Nachweisempfindlichkeit, durch die Anwesenheit von Kaliumiodid wesentlich beschleunigt.

Der Reaktionsablauf an dem Indikator unter Anwesenheit von Chlor ist folgender:

Durch das Chlor wird das Iod im Kaliumiodid oxidiert und als elementares Iod ausgeschieden. Dadurch wird eine deutliche Braunfärbung des ursprünglich weißen Indikatorpapiers hervorgerufen. Daran schließt sich eine zweite Reaktion des Indikators mit dem Chlor an, indem unter Einwirkung des Chlors auch das Mangan im Mangan(II)chlorid zu schwarzem Mangandioxid oxidiert wird. Diese zweite Reaktion ist notwendig, um eine dauerhafte Verfärbung des Indikators zu erzielen. Enthält der Indikator nur Kaliumiodid, so wird zwar auch unter Chloreinwirkung eine Dunkelfärbung des Indikators erreicht. Diese Dunkelfärbung ist aber nicht beständig. Nach einigen Stunden verblaßt sie wieder, und die Indikatoranzeige ist nur noch schwer erkennbar. Die Bildung von Mangandioxid dagegen geht nicht wieder zurück.

Der Indikator ist somit besonders geeignet, als Füllkörper in Prüfröhrchen zum Nachweis von Chlor in Luft eingesetzt zu werden. Gleicherweise kann der Indikator auch auf einem streifenförmigen Träger aufgebracht sein, welcher als Erschöpfungsindikator in Chlorfiltern verwendet werden kann.

Als Trägermaterial bietet sich neben dem bekannten Kieselgel auch Aluminiumoxid an. Als Träger für die Verwendung des Indikators zur Erschöpfungsanzeige bei Chlorfiltern eignet sich Mikroglasfaserpapier.

Zur Herstellung eines Indikators zum Nachweis von Chlor wird der Träger mit einer wäßrigen Lösung von jeweils 5 % Kaliumiodid und Mangan(II)-chlorid getränkt. Nach der Tränkung wird der Träger etwa 10 Stunden bei ungefähr 70 °C getrocknet.

## Ansprüche

1. Indikator zum Nachweis von Chlor durch Verfärbung von auf einem Träger aufgebrachtem Kaliumiodid, dadurch gekennzeichnet, daß der Indikator einen Zusatz an Manganchlorid aufweist.

## Claims

1. Indicator to detect chlorine by discoloration of potassium iodide applied to a carrier, characterized in that the indicator has an addition of manganous chloride.

## Revendications

1. Indicateur pour déceler du chlore par coloration d'iodure de potassium appliqué sur un support, caractérisé en ce que l'indicateur contient un ajout de chlorure de manganèse.